# EUROPEAN PATENT APPLICATION

(11) **EP 3 614 649 A1**
(43) Date of publication of application: **26.02.2020**
(21) Application number: 17905934.0
(22) Date of filing: 26.09.2017
(51) Int. Cl.: H04L 29/12

(54) **IP ADDRESS ALLOCATION METHOD AND DEVICE**

(30) Priority: 19.04.2017 CN 201710258730
(71) Applicant: ZTE Corporation, Shenzhen, Guangdong 518057 (CN)
(72) Inventor: GAO, Fei, Shenzhen Guangdong 518057 (CN)
(74) Representative: Angerhausen, Christoph
(86) International application number: PCT/CN2017/103470
(87) International publication number: WO 2018/192179

(57) **Abstract**

Provided in the embodiments of the present invention are an Internet Protocol (IP) address allocation method and device as well as Customer Premise Equipment (CPE), the method comprising: receiving request information for requesting an application for an IP address sent by a Local Area Network (LAN)-side client of a wireless terminal access device; when determining the LAN-side client to be a first type client, using a first public network IP address allocated by a network-side to the wireless terminal access device as an LAN-side gateway for allocating the public network IP address to the first type client, and allocating the public network IP address to the first type client on the condition that the wireless terminal access device has been already connected to the network; and/or when determining the LAN-side client to be a second type client, converting a private network IP address allocated to the second type client into the public network IP address on the condition that the wireless terminal access device has been already connected to the network. One problem to be solved by the invention is that a wireless terminal access device allocates an IP address to an LAN-side user thereof so as to access the Internet.

## Description

### TECHNICAL FIELD

The invention relates to the communication field, and in particular to an IP address allocation method and device.

### BACKGROUND

With the rapid development of the Internet, especially the rapid development and popularization of 3G/4G and WLAN services, a CPE device, as a relatively portable communication terminal, may provide network access functions for one or more users. Enterprise-level users need to obtain a public network IP address (for example, 74.125.239.15) after accessing the CPE, rather than a private network IP address allocated by the CPE to achieve enterprise-level applications. In the related art, an IP address that may access the Internet may not be allocated to a plurality of LAN-side users of the CPE device. In view of the above technical problem in the related art, an effective solution has not yet been proposed.

### SUMMARY

The embodiments of the invention provide an IP address allocation method and device to solve at least the problem that a wireless terminal access device allocates an IP address to an LAN-side user thereof so as to access the Internet.

One embodiment of the invention provides a method for allocating an Internet Protocol (IP) address, comprising: receiving request information for requesting an application for an IP address sent by a Local Area Network (LAN)-side client of a wireless terminal access device; when determining the LAN-side client to be a first type client, using a first public network IP address allocated by a network-side to the wireless terminal access device as an LAN-side gateway for allocating the public network IP address to the first type client and allocating the public network IP address to the first type client on the condition that the wireless terminal access device has been already connected to the network, wherein the first type client is an LAN-side client that obtains the public network IP address from the wireless terminal access device; and/or when determining the LAN-side client to be a second type client, converting a private network IP address allocated to the second type client into the public network IP address on the condition that the wireless terminal access device has been already connected to the network, wherein the second type client is an LAN-side client that obtains the private network IP address from the wireless terminal access device.

Optionally, before using a first public network IP address allocated by a network-side to the wireless terminal access device as an LAN-side gateway for allocating the public network IP address to the first type client and allocating the public network IP address to the first type client, the method further comprises: receiving a second public network IP address allocated by the network-side; and setting a WAN-side network card of the wireless terminal access device with the second public network IP address.

It should be noted that the number of the first type client may be one or more.

Optionally, the first public network IP address is acquired in at least one of the following manners: obtaining the first public network IP address in accordance with information of the second public network IP address on the condition that the second public network IP address is bound to the first public network IP address; obtaining the first public network IP address by data interaction of Remote Authentication Dial In User Service (RADIUS); and obtaining the first public network IP address by response information returned by the network-side, wherein the response information corresponds to the request information sent to the network-side.

Optionally, obtaining the first public network IP address by data interaction of RADIUS comprises: using the wireless terminal access device as a RADIUS client, and sending an access request to a public network RADIUS server; and receiving an access accept sent by the public network RADIUS server on the condition that the public network RADIUS server successfully authenticates the wireless terminal access device, wherein the access accept includes the first public network IP address.

Optionally, allocating the public network IP address to the first type client comprises: allocating the public network IP address to the first type client by using the LAN-side gateway in a manner of Dynamic Host Configuration Protocol (DHCP).

Optionally, allocating the public network IP address to the first type client by using the LAN-side gateway in a manner of DHCP comprises: starting a DHCP server in the wireless terminal access device; and allocating the public network IP address to the first type client by using the DHCP server and the LAN-side gateway, wherein the allocated public network IP address comes from a DHCP address pool specified by a public network server.

Optionally, allocating the public network IP network to the first type client by using the DHCP server and the LAN-side gateway comprises: sending, by the DHCP server, the request information for an application for an IP address sent by the first type client to the public network server; obtaining, by the DHCP server, the response information corresponding to the request information sent by the public network server, wherein the response information includes the public network IP address allocated by the public network DHCP server to the first type client; and sending, by the DHCP server, the allocated public network IP address to the first type client via the LAN-side gateway.

Optionally, after allocating the public network IP address to the first type client, the method further comprises: routing a received data packet sent by the first type client to a WAN-side network card of the wireless terminal access device; and sending the data packet to the network by the WAN-side network card of the wireless terminal access device.

Optionally, converting a private network IP address allocated to the second type client into the public network IP address comprises: performing a source IP address conversion of the received data packet sent by the second type client, wherein the source IP address conversion comprises: converting the private network IP address of the second type client into the public network IP address.

One embodiment of the invention provides a device for allocating an IP address, comprising: a receiving module configured to receive request information for requesting an application for an IP address sent by a LAN-side client of a wireless terminal access device; and a processing module configured to, when determining the LAN-side client to be a first type client, use a first public network IP address allocated by a network-side to the wireless terminal access device as an LAN-side gateway for allocating the public network IP address to the first type client and allocate the public network IP address to the first type client on the condition that the wireless terminal access device has been already connected to the network, wherein the first type client is an LAN-side client that obtains the public network IP address from the wireless terminal access device; and/or when determining the LAN-side client to be a second type client, convert a private network IP address allocated to the second type client into the public network IP address on the condition that the wireless terminal access device has been already connected to the network, wherein the second type client is an LAN-side client that obtains the private network IP address from the wireless terminal access device.

Optionally, the receiving module is further configured to receive a second public network IP address allocated by the network-side; and the processing module is further configured to set a WAN-side network card of the wireless terminal access device with the second public network IP address.

Optionally, the number of the first type client may be one or more.

Optionally, the processing module acquires the first public network IP address in at least one of the following manners: obtaining the first public network IP address in accordance with information of the second public network IP address on the condition that the second public network IP address is bound to the first public network IP address; obtaining the first public network IP address by data interaction of RADIUS; and obtaining the first public network IP address by response information returned by the network-side, wherein the response information corresponds to the request information sent to the network-side.

Optionally, the processing module is further configured to: use the wireless terminal access device as a RADIUS client, and send an access request to a public network RADIUS server; and receive an access accept sent by the public network RADIUS server on the condition that the public network RADIUS server successfully authenticates the wireless terminal access device, wherein the access accept includes the first public network IP address.

Optionally, the processing module is further configured to allocate the public network IP address to the first type client by using the LAN-side gateway in a manner of DHCP.

Optionally, the processing module is further configured to start a DHCP server in the wireless terminal access device; and allocate the public network IP address to the first type client by using the DHCP server and the LAN-side gateway, wherein the allocated public network IP address comes from a DHCP address pool specified by a public network server.

Optionally, the processing module is further configured to: send, by the DHCP server, the request information for an application for an IP address sent by the first type client to the public network server; obtain, by the DHCP server, the response information corresponding to the request information sent by the public network server, wherein the response information includes the public network IP address allocated by the public network DHCP server to the first type client; and send, by the DHCP server, the allocated public network IP address to the first type client via the LAN-side gateway.

Optionally, the processing module is further configured to perform a source IP address conversion of the received data packet sent by the second type client, wherein the source IP address conversion comprises: converting the private network IP address of the second type client into the public network IP address.

One embodiment of the invention provides a storage medium, comprising a stored program, wherein at least one operation of the above IP address allocation method is performed when the program is being run.

One embodiment of the invention provides a processor, which is configured to run a program, wherein at least one operation of the above IP address allocation method is performed when the program is being run.

By the embodiments of the invention, the wireless terminal access device may allocate the public network IP address to the first type client and/or allocate the private network IP address to the second type client, and for the second type client, the wireless terminal access device may convert the private network IP address allocated to the second type client into the public network IP address, so that both of the first type client and the second type client may access the Internet, so the problem that a wireless terminal access device allocates an IP address to an LAN-side user thereof so as to access the Internet in the related art may be solved, and an improved user experience is provided.

### BRIEF DESCRIPTION OF DRAWINGS

The figures described here are used to provide a further understanding of the invention, and form part of the present application. The examplary embodiments of the invention and description thereof are used to explain the invention, and do not form any improper limitation to the invention. In the figures:
FIG. 1 is a hardware structure block diagram of a mobile terminal for an IP address allocation method according to an embodiment of the invention;
FIG. 2 is a flowchart of an IP address allocation method according to an embodiment of the invention;
FIG. 3 is a structure block diagram of an IP address allocation device according to an embodiment of the invention;
FIG. 4 is a structure schematic diagram of a wireless terminal access device provided according to an embodiment of the invention;
FIG. 5 is a structure diagram of a device provided according to a preferred embodiment of the invention;
FIG. 6 is a schematic diagram of a workflow provided according to a preferred embodiment of the invention;
FIG. 7 is a schematic diagram of a process of interaction between a RADIUS client and a public network RADIUS server provided according to a preferred embodiment of the invention; and
FIG. 8 is a schematic diagram of a working principle of a DHCP relay provided according to a preferred embodiment of the invention.

### DETAILED DESCRIPTION

The invention will be described in detail below with reference to the figures in combination with the embodiments. It should be noted that the embodiments in the present application and the features in the embodiments may be combined with each other without conflictions.

It should be noted that the terms "first", "second" and the like in the Description, the Claims and the above figures of the invention are used to distinguish similar objects, and are not necessarily used to describe a particular order or precedence.

In order to meet needs of enterprise-level users, there are two methods for allocating an IP address in the related art:
Method 1: CPE works in a traditional bridge mode, and a WAN-side network card and a LAN-side network card are placed under the same network bridge, so that the client under the LAN-side network card directly sends a DHCP request for an application for an IP address to the WAN-side, and a WAN-side device acts as a DHCP server to allocate a public network IP address to the LAN-side client.
Method 2: The CPE works in an LTE bridge mode, and the WAN-side network card and a network card on the LAN-side are bridged to the same network bridge. After the CPE succeeds in 4G dialing, the network-side allocates a public network IP address thereto, the CPE starts a new dhcpd process therein, and after receiving the request for an application for an IP address sent by the client, the IP address previously obtained from the network-side is allocated to the client through the newly started dhcpd process to thereby achieve the object of obtaining the public network IP address by the client. The other clients accessed under the LAN-side network card obtain a private network IP address allocated by the CPE, and can not access the Internet.

As for method 1 above, the client may obtain the public network IP address, but the client that obtains the IP address in a DHCP manner may not access internal network resources of the CPE. The reason is that the IP address acquired by the client is the public network IP address allocated by a DHCP server connected by the upstream of the CPE, rather than the private network IP address allocated by the CPE. In addition, since there is no DHCP server inside the product when the CPE is in the traditional bridge mode, an internal network IP address may not be dynamically allocated to the client, in order to achieve the object of accessing the internal network resources by the client (including that the client logs in to the internal network page of the device to switch the mode of the device), the client accessing the CPE is required to manually specify that the IP address is in the same network segment as the CPE, and then log in to the CPE page to perform related operations. For ordinary users, the above operation steps are too professional, and even a professional performs the operation, the steps are also too complicated. In addition, if the gateway address of the CPE is forgotten, it is more difficult to enter the CPE page, so the user experience is not good.

As for method 2 above, after the CPE performs LTE dialing, the network-side may only allocate one public network IP address to the clients, and only one client accessing the CPE may obtain the public network IP address to access the Internet. Since the CPE itself will not be set with the public network, and the other clients accessing the CPE obtain the private network IP address allocated by the CPE, the other clients may only access the internal network resources of the CPE and may not access the Internet. Thus, the biggest problem of method 2 is that only one public network IP address may be allocated to one client, and only the client that obtains the public network IP address can access the Internet, while the other clients can not access the Internet.

### Embodiment 1

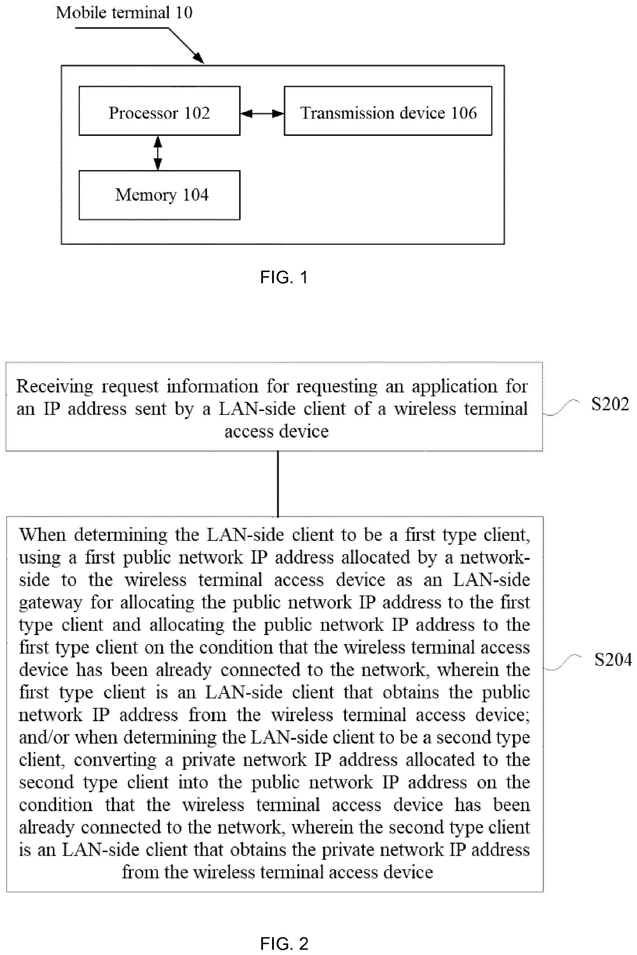

The method provided by Embodiment 1 of the present application may be performed in a mobile terminal, a computer terminal or a similar operating device. Taking running on the mobile terminal as an example, FIG. 1 is a hardware structure block diagram of a mobile terminal for an IP address allocation method according to an embodiment of the invention. As shown in FIG. 1, the mobile terminal 10 may include one or more (only one is shown in the figure) processors 102 (the processor 102 may include, but is not limited to, a processing device such as a microprocessor MCU or a programmable logic device FPGA), a memory 104 configured to store data, and a transmission device 106 configured as one having a communication function. The person skilled in the art may understand that the structure shown in FIG. 1 is only an examplary one, and does not limit the structure of the above electronic device. For example, the mobile terminal 10 may also include more or fewer components than those shown in FIG. 1, or have a configuration different from that shown in FIG. 1.

The memory 104 may be configured to store a software program for application software and a module, such as a program instruction/module corresponding to the IP address allocation method in the embodiment of the invention, and the processor 102 performs various functional applications and data processing by running the software program and the module stored in the memory 104, i.e., achieving the above method. The memory 104 may include a high speed random memory, and may also include a non-volatile memory such as one or more magnetic storage devices, flash memories, or other non-volatile solid state memories. In some examples, the memory 104 may further include storages remotely located relative to the processor 102, which remote storages may be connected to the mobile terminal 10 through a network. The examples of the above network include, but are not limited to, the Internet, enterprise internal networks, local area networks, mobile communication networks, and combinations thereof.

The transmission device 106 is configured to receive or send data via a network. The specific examples of the above network may include a wireless network provided by a communication service provider of the mobile terminal 10. In one example, the transmission device 106 includes an NIC (Network Interface Controller), which may be connected to other network devices through a base station to communicate with the Internet. In one example, the transmission device 106 may be an RF (Radio Frequency) module configured to communicate with the Internet in a wireless manner.

In this embodiment, an IP address allocation method running on the above mobile terminal is provided. FIG. 2 is a flowchart of an IP address allocation method according to an embodiment of the invention. As shown in FIG. 2, the flow includes the following steps:
Step 202, receiving request information for requesting an application for an IP address sent by a LAN-side client of a wireless terminal access device;
Step 204, when determining the LAN-side client to be a first type client, using a first public network IP address allocated by a network-side to the wireless terminal access device as an LAN-side gateway for allocating the public network IP address to the first type client, and allocating the public network IP address to the first type client on the condition that the wireless terminal access device has been already connected to the network, wherein the first type client is an LAN-side client that obtains the public network IP address from the wireless terminal access device; and/or when determining the LAN-side client to be a second type client, converting a private network IP address allocated to the second type client into the public network IP address on the condition that the wireless terminal access device has been already connected to the network, wherein the second type client is an LAN-side client that obtains the private network IP address from the wireless terminal access device.

Through the above steps, the wireless terminal access device may allocate the public network IP address to the first type client and/or allocate the private network IP address to the second type client, and for the second type client, the wireless terminal access device may convert the private network IP address allocated to the second type client into the public network IP address, so that both of the first type client and the second type client may access the Internet, so the problem that a wireless terminal access device allocates an IP address to an LAN-side user thereof so as to access the Internet in the related art may be solved, and an improved user experience is provided.

It should be noted that when the above step S204 is represented as follows: when determining the LAN-side client to be a first type client, using a first public network IP address allocated by a network-side to the wireless terminal access device as an LAN-side gateway for allocating the public network IP address to the first type client, and allocating the public network IP address to the first type client on the condition that the wireless terminal access device has been already connected to the network, wherein the first type client is an LAN-side client that obtains the public network IP address from the wireless terminal access device. The wireless terminal access device may use the first public network IP address as the LAN-side gateway for allocating the public network IP address to the first type client on the condition that the wireless terminal access device has been already connected to the network, so that the wireless terminal access device may allocate the public network IP address to a plurality of first type clients to thereby achieve that all of the first type clients can access the Internet.

It should be noted that when the above step S204 is represented as follows: when determining the LAN-side client to be a first type client, using a first public network IP address allocated by a network-side to the wireless terminal access device as an LAN-side gateway for allocating the public network IP address to the first type client, and allocating the public network IP address to the first type client on the condition that the wireless terminal access device has been already connected to the network, wherein the first type client is an LAN-side client that obtains the public network IP address from the wireless terminal access device; and when determining the LAN-side client to be a second type client in accordance with the request information, converting a private network IP address allocated to the second type client into the public network IP address on the condition that the wireless terminal access device has been already connected to the network, wherein the second type client is an LAN-side client that obtains the private network IP address from the wireless terminal access device. The wireless terminal access device may either allocate the public network IP address to a plurality of first type clients or convert the private network IP address allocated to the second type client into the public network IP address, so that both of the first type client and the second type client can access the Internet.

When the above step S204 is represented as follows: when determining the LAN-side client to be a second type client, converting a private network IP address allocated to the second type client into the public network IP address on the condition that the wireless terminal access device has been already connected to the network, wherein the second type client is an LAN-side client that obtains the private network IP address from the wireless terminal access device. The wireless terminal access device may convert the private network IP address allocated to the second type client into the public network IP address, so that the second type client that obtains the private network IP address can also access the Internet.

It should be noted that the determination of the LAN-side client to be the first type client or the second type client may be made through the above request information, i.e., if the above request information is sent by the first type client, the LAN-side client is determined to be the first type client, and if the above request information is sent by the second type client, the LAN-side client is determined to be the second type client, but the circumstance is not limited thereto.

In an embodiment of the invention, the first public network IP address allocated by the network-side to the wireless terminal access device is used as the LAN-side gateway for allocating the public network IP address to the first type client, and before allocating the public network IP address to the first type client, the above method may further comprise: receiving a second public network IP address allocated by the network-side; and setting a WAN-side network card of the wireless terminal access device with the second public network IP address.

It should be noted that the above second public network IP address may be obtained by the LTE dialing, but the circumstance is not limited thereto.

It should be noted that the number of the above first type client may be one or more.

It should be noted that before connecting the wireless terminal access device to the network, the above method may further comprise: judging whether the wireless terminal access device has succeeded in dialing, wherein for the above first type client, if the dialing is successful, it indicates that the wireless terminal access device has acquired the second public network IP address.

In an embodiment of the invention, before using a first public network IP address allocated by a network-side to the wireless terminal access device as an LAN-side gateway for allocating the public network IP address to the first type client and allocating the public network IP address to the first type client, the method may further comprise: judging whether the public network server has been applied for the first public network IP address, wherein the first public network IP address is acquired when the judgment result is negative.

It should be noted that acquiring the first public network IP address may comprise at least one of the following: obtaining the first public network IP address in accordance with information of the second public network IP address on the condition that the second public network IP address is bound to the first public network IP address; obtaining the first public network IP address by data interaction of RADIUS; and obtaining the first public network IP address by response information returned by the network-side, wherein the response information corresponds to the request information sent to the network-side.

It should be noted that the above response information and/or request information may be represented in the form of a message, but the circumstance is not limited thereto.

It should be noted that obtaining the first public network IP address by data interaction of RADIUS may comprise: using the wireless terminal access device as a RADIUS client, and sending an access request to a public network RADIUS server; and receiving an access accept sent by the public network RADIUS server on the condition that the public network RADIUS server successfully authenticates the wireless terminal access device, wherein the access accept includes the first public network IP address.

In an embodiment of the invention, allocating the public network IP address to the first type client may comprise: allocating the public network IP address to the first type client by using the LAN-side gateway in a manner of DHCP.

It should be noted that allocating the public network IP address to the first type client by using the LAN-side gateway in a manner of DHCP may be represented as follows: starting a DHCP server in the wireless terminal access device; and allocating the public network IP adress to the first type client by using the DHCP server and the LAN-side gateway, wherein the allocated public network IP address comes from a DHCP address pool specified by a public network server.

It should be noted that allocating the public network IP network to the first type client by using the DHCP server and the LAN-side gateway may be represented as follows: sending, by the DHCP server, the request information for an application for an IP address sent by the first type client to the public network server; obtaining, by the DHCP server, the response information corresponding to the request information sent by the public network server, wherein the response information includes the public network IP address allocated by the public network DHCP server to the first type client; and sending, by the DHCP server, the allocated public network IP address to the first type client via the LAN-side gateway.

In an embodiment of the invention, after allocating the public network IP address to the first type client, the above method may further comprise: routing a received data packet sent by the first type client to a WAN-side network card of the wireless terminal access device; and sending the data packet to the network by the WAN-side network card of the wireless terminal access device.

It should be noted that converting a private network IP address allocated to the second type client into the public network IP address comprises: performing a source IP address conversion of the received data packet sent by the second type client, wherein the source IP address conversion comprises: converting the private network IP address of the second type client into the public network IP address.

Optionally, the body for performing the above steps may be the wireless terminal access device, such as the CPE, but is not limited thereto.

It should be noted that the above first type client and second type client may be enterprise users, but are not limited thereto, and may be also, for example, individual users.

From the description of the above implementations, the person skilled in the art may clearly understand that the method according to the above embodiments may be implemented by means of software and a necessary general hardware platform, and of course, the method may be also implemented by hardware, but in many cases, the former is the preferred solution. Based on such understanding, the technical solutions of the invention may have its essence or its part contributing to the prior art being embodied in the form of a software product, and the computer software product is stored in a storage medium (e.g., ROM/RAM, magnetic disk, and optical disk), and includes several instructions for causing one terminal device (which may be a mobile phone, a computer, a server, or a network device, etc.) to perform the method described in the respective embodiments of the invention.

### Embodiment 2

This embodiment further provides an IP address allocation device, which device is configured to implement the above embodiments and preferred implementations, and no unnecessary details are further given with respect to the contents having been described. As used below, the term "module" may achieve a combination of software and/or hardware with a predetermined function. The device described in the embodiments below is preferably implemented by software, but hardware or a combination of software and hardware is also possible and contemplated.

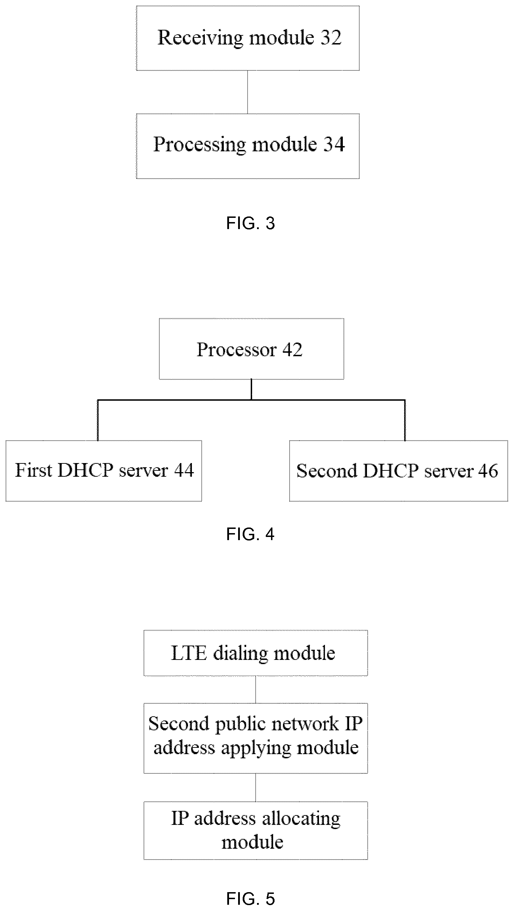

FIG. 3 is a structure block diagram of an IP address allocation device according to an embodiment of the invention. As shown in FIG. 3, the device comprises:
a receiving module 32 configured to receive request information for requesting an application for an IP address sent by a LAN-side client of a wireless terminal access device; and
a processing module 34 connected with the above receiving module 32 and configured to, when determining the LAN-side client to be a first type client, use a first public network IP address allocated by a network-side to the wireless terminal access device as an LAN-side gateway for allocating the public network IP address to the first type client and allocate the public network IP address to the first type client on the condition that the wireless terminal access device has been already connected to the network, wherein the first type client is an LAN-side client that obtains the public network IP address from the wireless terminal access device; and/or when determining the LAN-side client to be a second type client, convert a private network IP address allocated to the second type client into the public network IP address on the condition that the wireless terminal access device has been already connected to the network, wherein the second type client is an LAN-side client that obtains the private network IP address from the wireless terminal access device.

By the above device, the wireless terminal access device may allocate the public network IP address to the first type client and/or allocate the private network IP address to the second type client, and for the second type client, the wireless terminal access device may convert the private network IP address allocated to the second type client into the public network IP address, so that both of the first type client and the second type client may access the Internet, so the problem that a wireless terminal access device allocates an IP address to an LAN-side user thereof so as to access the Internet in the related art may be solved, and an improved user experience is provided.

It should be noted that the above processing module 34 may be further configured to determine whether the LAN-side client is the first type client or the second type client in accordance with the request information, but the circumstance is not limited thereto.

In an embodiment of the invention, the above receiving module 32 may be further configured to receive a second public network IP address allocated by the network-side; and the above processing module 34 may be further configured to set a WAN-side network card of the wireless terminal access device with the second public network IP address.

It should be noted that the above second public network IP address may be obtained by the LTE dialing, but the circumstance is not limited thereto.

It should be noted that the number of the above first type client may be one or more.

It should be noted that the above device may further comprise: a second judging module connected with the above processing module 34 and configured to judge whether the public network server has been applied for the first public network IP address, wherein the first public network IP address is acquired when the judgment result is negative.

It should be noted that the above device may further comprise: a third judging module connected with the above processing module 34 and configured to judge whether the wireless terminal access device has succeeded in dialing, wherein for the above first type client, if the dialing is successful, it indicates that the wireless terminal access device has acquired the second public network IP address.

In an embodiment of the invention, the above processing module 34 may acquire the first public network IP address in at least one of the following manners: obtaining the first public network IP address in accordance with information of the second public network IP address on the condition that the second public network IP address is bound to the first public network IP address; obtaining the first public network IP address by data interaction of RADIUS; and obtaining the first public network IP address by response information returned by the network-side, wherein the response information corresponds to the request information sent to the network-side.

It should be noted that the above processing module 34 may be further configured to: use the wireless terminal access device as a RADIUS client, and send an access request to a public network RADIUS server; and receive an access accept sent by the public network RADIUS server on the condition that the public network RADIUS server successfully authenticates the wireless terminal access device, wherein the access accept includes the first public network IP address.

In an embodiment of the invention, the above processing module 34 may be further configured to allocate the public network IP address to the first type client by using the LAN-side gateway in a manner of DHCP.

It should be noted that the above processing module 34 may be further configured to start a DHCP server in the wireless terminal access device; and allocate the public network IP network to the first type client by using the DHCP server and the LAN-side gateway, wherein the allocated public network IP address comes from a DHCP address pool specified by a public network server.

It should be noted that the above processing module 34 may be further configured to send, by the DHCP server, the request information for an application for an IP address sent by the first type client to the public network server; obtain, by the DHCP server, the response information corresponding to the request information sent by the public network server, wherein the response information includes the public network IP address allocated by the public network DHCP server to the first type client; and send, by the DHCP server, the allocated public network IP address to the first type client via the LAN-side gateway.

In an embodiment of the invention, the above processing module 34 may be further configured to route a received data packet sent by the first type client to a WAN-side network card of the wireless terminal access device; and send the data packet to the network by the WAN-side network card of the wireless terminal access device.

In an embodiment of the invention, the above processing module 34 may be further configured to perform a source IP address conversion of the received data packet sent by the second type client, wherein the source IP address conversion comprises: converting the private network IP address of the second type client into the public network IP address.

It should be noted that the above device may be further located in a user device terminal or an access device, but the circumstance is not limited thereto.

It should be noted that the above respective modules may be implemented by software or hardware, and for the latter, it may be implemented in, but not limited to, the manner below: the above modules are all in the same processor; or the above respective modules are respectively in different processors in the form of any combination.

### Embodiment 3

The embodiments of the invention further provide a wireless terminal access device. FIG. 4 is a structure schematic diagram of a wireless terminal access device provided according to an embodiment of the invention. As shown in FIG. 4, the wireless terminal access device comprises:
a processor 42 configured to receive request information for requesting an application for an IP address sent by a local area network LAN-side client of a wireless terminal access device; when determining the LAN-side client to be a first type client, use a first public network IP address allocated by a network-side to the wireless terminal access device as an LAN-side gateway for allocating the public network IP address to the first type client on the condition that the wireless terminal access device has been already connected to the network; and when determining the LAN-side client to be a second type client, convert a private network IP address allocated to the second type client into the public network IP address on the condition that the wireless terminal access device has been already connected to the network;
a first DHCP sever 44 connected with the above processor 42 and configured to allocate the public network IP address to the first type client together with the LAN-side gateway; and
a second DHCP server 46 connected with the above processor 42 and configured to allocate the above private network IP address to the second type client, wherein the first type client is the LAN-side client that obtains the public network IP address from the wireless terminal access device; wherein the second type client is the LAN-side client that obtains the private network IP address from the wireless terminal access device.

By the above wireless terminal access device, for the first type client, the first public network IP address acquired by the wireless terminal access device is used as the LAN-side gateway for allocating the public network IP address to the first type client to allocate the public network IP address to the first type client, so that the public network IP address may be allocated to all of the first type clients, and the circumstance is no longer limited to only allocating the public network IP address to one of the first type clients, and in addition, for the second type client, although the private network IP address is allocated thereto, it may access the Internet after the IP address conversion, so that both of the first type client and the second type client may access the Internet, so the problem that some LAN-side users of the wireless terminal access device may not access the Internet in the related art may be solved, and an improved user experience is provided.

It should be noted that the above processor 42 may be further configured to determine whether the LAN-side client is the first type client or the second type client in accordance with the request information, but the circumstance is not limited thereto.

It should be noted that the above wireless terminal access device may further comprise: an LTE dialing module connected with the above processor 42 and configured to receive a second public network IP address allocated by the network-side; and the above processor 42 may be further configured to set a WAN-side network card of the wireless terminal access device with the second public network IP address.

It should be noted that the above second public network IP address may be obtained by the LTE dialing, but the circumstance is not limited thereto.

It should be noted that the above processor 42 may be further configured to judge whether the public network server has been applied for the first public network IP address, wherein the first public network IP address is acquired when the judgment result is negative.

It should be noted that the above processor 42 may be further configured to judge whether the wireless terminal access device has succeeded in dialing, wherein for the above first type client, if the dialing is successful, it indicates that the wireless terminal access device has acquired the second public network IP address.

In an embodiment of the invention, the above processor 42 may acquire the first public network IP address in at least one of the following manners: obtaining the first public network IP address in accordance with information of the second public network IP address on the condition that the second public network IP address is bound to the first public network IP address; obtaining the first public network IP address by data interaction of RADIUS; and obtaining the first public network IP address by response information returned by the network-side, the response information corresponding to the request information sent to the network-s ide.

It should be noted that the above processor 42 may be further configured to: use the wireless terminal access device as a RADIUS client, and send an access request to a public network RADIUS server; and receive an access accept sent by the public network RADIUS server on the condition that the public network RADIUS server successfully authenticates the wireless terminal access device, wherein the access accept includes the first public network IP address.

In an embodiment of the invention, the above processor 42 may be further configured to allocate the public network IP address to the first type client by using the LAN-side gateway in a manner of DHCP.

It should be noted that the above processor 42 may be further configured to start the first DHCP server 44 in the wireless terminal access device; and allocate the public network IP address to the first type client by using the first DHCP server 44 and the LAN-side gateway together, wherein the allocated public network IP address comes from a DHCP address pool specified by a public network server.

It should be noted that the above first DHCP server 44 may be further configured to send the request information configured to apply for an IP address sent by the first type client to the public network server; receive the response information corresponding to the request information sent by the public network server, wherein the response information includes the public network IP address allocated by the public network server to the first type client; and send the allocated public network IP address to the first type client via the LAN-side gateway.

In an embodiment of the invention, the above processor 42 may be further configured to route a received data packet sent by the first type client to a WAN-side network card of the wireless terminal access device; and send the data packet to the network by the WAN-side network card of the wireless terminal access device.

In an embodiment of the invention, the above processor 42 may be further configured to perform a source IP address conversion of the received data packet sent by the second type client, wherein the source IP address conversion comprises: converting the private network IP address of the second type client into the public network IP address.

### Embodiment 4

The embodiments of the invention further provide a storage medium. Optionally, in this embodiment, the above storage medium may be configured to store program codes for performing at least one step of the method in Embodiment 1.

Optionally, in this embodiment, the above storage medium may include, but is not limited to, various media capable of storing program codes: U-disk, ROM (Read-Only Memory), RAM (Random Access Memory), mobile hard disk, magnetic disk, optical disk and the like.

Optionally, in this embodiment, the processor performs at least one step of the method in Embodiment 1 in accordance with the program codes that have been stored in the storage medium.

Optionally, the examples described in the above embodiments and optional implementations may be referred to for the specific examples in this embodiment, and no unnecessary details are further given in this embodiment.

For a better understanding of the invention, the invention is further explained below in combination with a preferred embodiment.

The preferred embodiment of the invention provides a method for allocating a public network IP address to a client by relaying, and the specific implementation method is as follows: the LAN-side clients are firstly divided into two types, one type may only obtain the private network IP address (for example, 192.168.0.100) from the CPE (corresponding to the second type client in the above embodiments), and the other type may only obtain the public network IP address from the CPE (corresponding to the first type client in the above embodiments); after the CPE performs 4G dialing, the network-side allocates the public network IP address (for example, 74.125.239.15) thereto and sets the WAN-side network card of the CPE with the IP address. At this time, after receiving a data packet sent by a second type user (corresponding to the above second type client), the CPE performs a source IP address conversion of the data packet, and converts the private IP address into the public network IP address to achieve that the second type user accesses the Internet. The processing method for a first type user (corresponding to the first type client in the above embodiments) accessing the Internet is as follows: the CPE again applies to the network-side for the first public network IP address and uses it as the gateway for allocating the IP address to a first type LAN-side user, since the application to the network-side for the first public network IP address relates to an interaction with the network-side, depending on an interface provided by the network-side, the second and first public network IP addresses may be paired for use in advance, or the CPE may send a request message to the network-side to request the network-side to make a response for notification, and when allocating the first public network IP address, the network-side may also notify or not notify the CPE of information such as a subnet mask, a DHCP address pool range and a lease time of the first public network IP address. If having been notified of information such as the subnet mask, the DHCP address pool range and the lease time, the CPE makes, after receiving the first network address, the address act as the gateway for allocating the public network IP address to the first type client to allocate the public network IP address to the client in a DHCP manner to thereby achieve the object that the first type client obtains the public network IP address; if having not been notified of the above information, the CPE may send the request for the application for the public network IP address sent by the client to a public network DHCP server, which allocates the public network IP address to the client, and at this time, the CPE acts as a DHCP relay. After receiving the data packet for accessing the Internet sent by the first type client, the CPE does not perform the source IP address conversion of the data packet, but directly routes the data packet to the WAN-side network card in a routing manner and sends it to the public network to thereby achieve the object that the first type client accesses the Internet.

The solution achieves the object that some LAN-side users obtain the public network IP address to access the Internet, while the other LAN-side users obtain the private network IP address to access the Internet.

FIG. 5 is a structure diagram of a device provided according to a preferred embodiment of the invention. As shown in FIG. 5, the device has the following three modules in all:
an LTE dialing module that is responsible for using the SIM card to perform the LTE dialing to thereby obtain the second public network IP address, and setting the WAN-side network card of the CPE with the public network IP address after obtaining the public network IP address, the IP address also acting as an external IP address of the CPE;
a first public network IP address applying module (corresponding to the processing module 34 or the processor 42 in the above embodiments), after succeeding in the LTE dialing to obtain the second public network IP address, the CPE interacts with the network-side to obtain the first public network IP address, and the IP address will act as a first LAN-side gateway address to allocate the public network IP address to the client; and
an IP address allocating module, which is responsible for either allocating the private network IP address to clients under a second type network card or allocating the public network IP address to clients under a first type network card.

It should be noted that the above allocation of the IP address may be partially or wholly the same as the functions achieved by the above first DHCP server 44 and/or the second DHCP server 46.

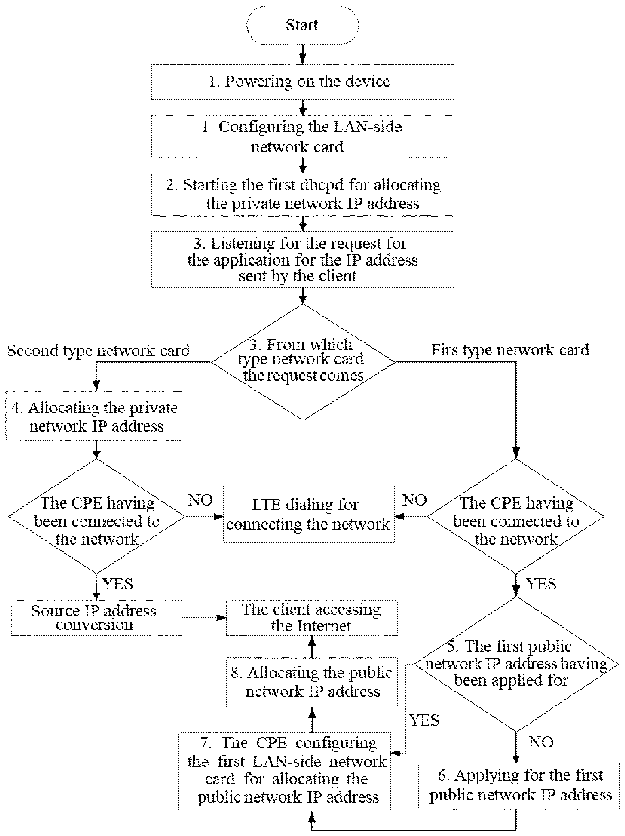

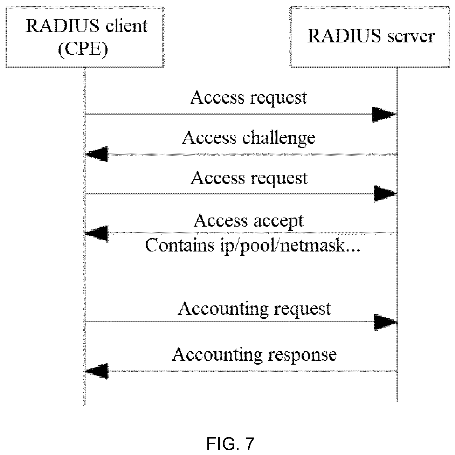

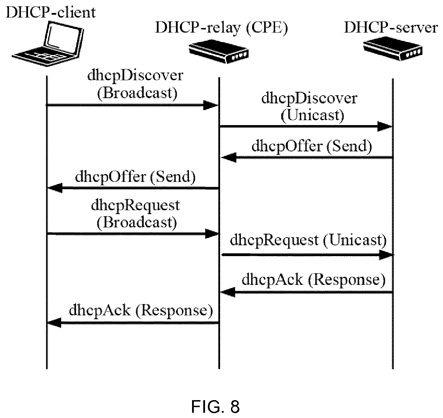

FIG. 6 is a schematic diagram of a workflow provided according to a preferred embodiment of the invention. As shown in FIG. 6, the workflow is as follows:
Step 1: After being powered on, the CPE device firstly configures at least one LAN-side network card, and divides the network card into second type network card and first type network card, wherein the clients accessed under the second type network card may only obtain the private network IP address allocated by the CPE, and the CPE provides an Internet service for the device by performing the source IP address conversion of the data packet sent by the device; the clients accessed under the first type network card may only obtain the public network IP address allocated by the CPE, and the data packet sent by the device is not required to undergo the source IP address conversion after reaching the CPE, but the CPE provides the Internet service for the device in a routing manner.
Step 2: The CPE internally starts a second dhcpd (DHCP server), and is configured to allocate the private network IP address to the clients accessed under the second type network card.
Step 3: The CPE listens for the request for the application for the IP address sent by the LAN-side client, and since the at least one LAN-side network card has been divided into the second type network card and the first type network card (see step 1 for details), after the request sent by the client is received, it is required to judge whether the current request is sent from the client accessed under the second type network card or from the client accessed under the first type network card. If the request comes from the client accessed under the second type network card, step 4 below is performed, and if the request comes from the client accessed under the first type network card, step 5 below is performed.
Step 4: If the request comes from the client accessed under the second type network card, the CPE firstly allocates the private network IP address to the client by the second DHCP server started in step 2. If the CPE has not been already connected to the network, the LTE dialing is performed for connecting the network; and if the network has been successfully connected, the CPE performs the source IP address conversion of the data packet sent by the client accessed under the second type network card, and converts the private IP address of the client into the public network IP address and sends it to the public network to thereby provide the Internet service.
Step 5: If the request comes from the client accessed under the first type network card, the CPE firstly judges whether the dialing has been successfully performed. If the CPE has not already succeeded in dialing, the LTE dialing is performed for connecting the network; and if the network has been successfully connected, the CPE checks whether the public network server has been applied for the first public network IP address. If the first public network IP address has not been already applied for, step 6 is performed, and if the first public network IP address has been already applied for, step 7 is performed.
Step 6: The methods for applying for the first public network IP address are multiple, and are not limited to the method described in the present invention. Since the first public network IP address is obtained from the network-side, the manner of acquiring the first public network IP address depends on the allocating manner of the network-side, and the method comprises:
   Method 1: Binding to the SIM card. The service provider may bind some information of the current SIM card to the first public network IP address, and the "some information of the SIM card" recited in the present invention includes, but is not limited to, the imsi number and so on, and the first public network IP address may be calculated by the information after binding.
   Method 2: Obtaining by data interaction of RADIUS. The CPE device internally starts the RADIUS client to perform the data interaction with the public network RADIUS server. FIG. 7 is a schematic diagram of a process of interaction between a RADIUS client and a public network RADIUS server provided according to a preferred embodiment of the invention. As shown in FIG. 7, the CPE serving as the RADIUS client sends an access-request packet using a user name and a password required for the connection, the public network RADIUS server compares the user information with information in a user database for an analysis, and if the authentication succeeds, right information of the user is sent to the RADIUS client (CPE here) with an access-accept packet, where the information such as the allocated public network IP address, the DHCP address pool of the public network IP, the lease time and the subnet mask is packaged in the response message to be sent to the CPE serving as the RADIUS client; if the authentication fails, an access-reject packet is returned. Then the RADIUS client accesses/rejects the user in accordance with the received authentication result. If the user may be accessed, the radius client sends an accounting-request packet to the RADIUS server, and the value of the status-type is start. The RADIUS server returns an accounting-response packet.
   Method 3: Obtaining by other data interactions, for example, obtaining by sending an http message or udp message to a sever on the network-side.
Step 7: After obtaining the public network IP address, the CPE uses the public network IP address as the first LAN-side gateway and sets the first LAN-side network card with the public network IP address, which serves as the gateway for subsequently allocating the public network IP address to the client connected to the first LAN-side network card, and then allocates the public network IP address to the client.
Step 8: The allocation of the public network IP address includes, but is not limited to, the following methods:
   Method 1: if the public network RADIUS server allocates the public network IP address, the subnet mask, and the DHCP address pool to the CPE as described in method 2 in step 6, at this time, the CPE may internally start the first DHCP server, which server is distinguished from the second DHCP sever as described in above step 2. The server is configured to allocate the public network IP address to the client connected to the first LAN-side network card, and listen for the first LAN-side network card. The allocated IP address comes from the DHCP address pool specified by the RADIUS server. The client connected to the first LAN-side network card does not need to perform the source IP address conversion after receiving such public network IP address, but sends the data packet to the WAN-side of the CPE by routing and then sends it to the public network to thereby achieve that the client accesses the Internet by the public network IP address.
   Method 2: in step 6, the CPE internally starts the DHCP relay to allocate the public network IP address to the client unless it only obtains the address of the public network DHCP server of the first public network IP address. FIG. 8 is a schematic diagram of a working principle of a DHCP relay provided according to a preferred embodiment of the invention. As shown in FIG. 8, the DHCP relay (CPE) receives a broadcast message for the application for the IP address sent by the client, and then converts the broadcast message into an unicast message and sends it to the public network DHCP server, the public network DHCP server makes a response of allocating the IP address to the DHCP relay after receiving the request, the relay allocates the IP address to the client after receiving the message returned by the server, and the client achieves accessing the Internet after obtaining the public network IP address.

The object that the client obtains the public network IP address to access the Internet may be achieved after the above operations are performed.

Apparently, the person skilled in the art should understand that the above respective modules or steps of the invention may be implemented by a general-purpose computing device, and they may be centralized on a single computing device or distributed across a network composed of a plurality of computing devices; optionally, they may be implemented by program codes executable by the computing device, so they may be stored in the storage device and performed by the computing device, and in some cases, they may be implemented by performing the steps shown or described in an order different from the order here, or respectively making them into respective integrated circuit modules, or making a plurality of modules or steps among them into single integrated circuit modules. Thus, the invention is not limited to any specific combination of hardware and software.

The above description only relates to the preferred embodiments of the invention, and are not intended to limit the invention. To the person skilled in the art, the invention may have various alternations and changes. Any modifications, equivalent substitutions, improvements and the like can be made within the spirit and principle of the invention should be included in the protection scope of the invention.

### Industrial Applicability

As described above, an IP address allocation method and device provided by the embodiments of the invention have the following beneficial effects: the problem that a wireless terminal access device allocates an IP address to an LAN-side user thereof so as to access the Internet may be solved, and an improved user experience is provided.

## Claims

1. A method for allocating an IP address, comprising:
receiving request information for requesting an application for an IP address sent by a LAN-side client of a wireless terminal access device;
when determining the LAN-side client to be a first type client, using a first public network IP address allocated by a network-side to the wireless terminal access device as an LAN-side gateway for allocating the public network IP address to the first type client, and allocating the public network IP address to the first type client on the condition that the wireless terminal access device has been already connected to the network, wherein the first type client is an LAN-side client that obtains the public network IP address from the wireless terminal access device; and/or
when determining the LAN-side client to be a second type client, converting a private network IP address allocated to the second type client into the public network IP address on the condition that the wireless terminal access device has been already connected to the network, wherein the second type client is an LAN-side client that obtains the private network IP address from the wireless terminal access device.

2. The method according to claim 1, wherein before using a first public network IP address allocated by a network-side to the wireless terminal access device as an LAN-side gateway for allocating the public network IP address to the first type client, and allocating the public network IP address to the first type client, the method further comprises:
receiving a second public network IP address allocated by the network-side; and
setting a WAN-side network card of the wireless terminal access device with the second public network IP address.

3. The method according to claim 1 or 2, wherein the number of the first type client may be one or more.

4. The method according to claim 3, wherein the first public network IP address is acquired in at least one of the following manners:
obtaining the first public network IP address in accordance with information of the second public network IP address on the condition that the second public network IP address is bound to the first public network IP address;
obtaining the first public network IP address by data interaction of RADIUS; and
obtaining the first public network IP address by response information returned by the network-side, wherein the response information corresponds to the request information sent to the network-side.

5. The method according to claim 4, wherein obtaining the first public network IP address by data interaction of RADIUS comprises:
using the wireless terminal access device as a RADIUS client, and sending an access request to a public network RADIUS server; and
receiving an access accept sent by the public network RADIUS server on the condition that the public network RADIUS server successfully authenticates the wireless terminal access device, wherein the access accept includes the first public network IP address.

6. The method according to claim 1, wherein allocating the public network IP address to the first type client comprises:
allocating the public network IP address to the first type client by using the LAN-side gateway in a manner of DHCP.

7. The method according to claim 6, wherein allocating the public network IP address to the first type client by using the LAN-side gateway in a manner of DHCP comprises:
starting a DHCP server in the wireless terminal access device; and
allocating the public network IP address to the first type client by using the DHCP server and the LAN-side gateway, wherein the allocated public network IP address comes from a DHCP address pool specified by a public network server.

8. The method according to claim 7, wherein allocating the public network IP network to the first type client by using the DHCP server and the LAN-side gateway comprises:
sending, by the DHCP server, the request information for an application for an IP address sent by the first type client to the public network server;
obtaining, by the DHCP server, the response information corresponding to the request information sent by the public network server, wherein the response information includes the public network IP address allocated by the public network DHCP server to the first type client; and
sending, by the DHCP server, the allocated public network IP address to the first type client via the LAN-side gateway.

9. The method according to claim 1, wherein after allocating the public network IP address to the first type client, the method further comprises:
routing a received data packet sent by the first type client to a WAN-side network card of the wireless terminal access device; and
sending the data packet to the network by the WAN-side network card of the wireless terminal access device.

10. The method according to claim 1, wherein converting a private network IP address allocated to the second type client into the public network IP address comprises:
performing a source IP address conversion of the received data packet sent by the second type client, wherein the source IP address conversion comprises: converting the private network IP address of the second type client into the public network IP address.

11. A device for allocating an IP address, comprising:
a receiving module, which is configured to receive request information for requesting an application for an IP address sent by a LAN-side client of a wireless terminal access device; and
a processing module, which is configured to, when determining the LAN-side client to be a first type client, use a first public network IP address allocated by a network-side to the wireless terminal access device as an LAN-side gateway for allocating the public network IP address to the first type client, and allocate the public network IP address to the first type client on the condition that the wireless terminal access device has been already connected to the network, wherein the first type client is an LAN-side client that obtains the public network IP address from the wireless terminal access device; and/or when determining the LAN-side client to be a second type client, convert a private network IP address allocated to the second type client into the public network IP address on the condition that the wireless terminal access device has been already connected to the network, wherein the second type client is an LAN-side client that obtains the private network IP address from the wireless terminal access device.

12. The device according to claim 11, wherein the receiving module is further configured to receive a second public network IP address allocated by the network-side; and the processing module is further configured to set a WAN-side network card of the wireless terminal access device with the second public network IP address.

13. The device according to claim 11 or 12, wherein the number of the first type client may be one or more.

14. The device according to claim 13, wherein the processing module acquires the first public network IP address in at least one of the following manners: obtaining the first public network IP address in accordance with information of the second public network IP address on the condition that the second public network IP address is bound to the first public network IP address; obtaining the first public network IP address by data interaction of RADIUS; and obtaining the first public network IP address by response information returned by the network-side, wherein the response information corresponds to the request information sent to the network-side.

15. The device according to claim 14, wherein the processing module is further configured to: use the wireless terminal access device as a RADIUS client, and send an access request to a public network RADIUS server; and receive an access accept sent by the public network RADIUS server on the condition that the public network RADIUS server successfully authenticates the wireless terminal access device, wherein the access accept includes the first public network IP address.

16. The device according to claim 11, wherein the processing module is further configured to allocate the public network IP address to the first type client by using the LAN-side gateway in a manner of DHCP.

17. The device according to claim 16, wherein the processing module is further configured to: start a DHCP server in the wireless terminal access device; and allocate the public network IP address to the first type client by using the DHCP server and the LAN-side gateway, wherein the allocated public network IP address comes from a DHCP address pool specified by a public network server.

18. The device according to claim 17, wherein the processing module is further configured to: send, by the DHCP server, the request information for an application for an IP address sent by the first type client to the public network server; obtain, by the DHCP server, the response information corresponding to the request information sent by the public network server, wherein the response information includes the public network IP address allocated by the public network DHCP server to the first type client; and send, by the DHCP server, the allocated public network IP address to the first type client via the LAN-side gateway.

19. The device according to claim 11, wherein the processing module is further configured to perform a source IP address conversion of the received data packet sent by the second type client, wherein the source IP address conversion comprises: converting the private network IP address of the second type client into the public network IP address.

20. A storage medium, containing a stored program, wherein at least one operation of the method according to any one of claims 1 to 10 is performed when the program is being run.

21. A processor, which is configured to run a program, wherein at least one operation of the method according to any one of claims 1 to 10 is performed when the program is being run.
